# EUROPEAN PATENT APPLICATION

(11) **EP 2 352 097 A1**
(43) Date of publication of application: **03.08.2011**
(21) Application number: 09819216.4
(22) Date of filing: 07.10.2009
(51) Int. Cl.: G06F 13/00

(54) **DEVICE AND METHOD FOR ANNOUNCING USER STATUS**

(30) Priority: 07.10.2008 JP 2008260325
(71) Applicant: International Business Machines Corporation, Armonk, NY 10504 (US)
(72) Inventor: SAITO Akira, Yamato-shi Kanagawa 242-8502 (JP); UENOHARA Hayato, Yamato-shi Kanagawa 242-8502 (JP); TAKEUCHI Shigeki, Yamato-shi Kanagawa 242-8502 (JP); KONNO Kazuhiro, Yamato-shi Kanagawa 242-8502 (JP); ISHIKAWA Nobuyuki, Yamato-shi Kanagawa 242-8502 (JP)
(74) Representative: Robertson, Tracey
(86) International application number: PCT/JP2009/067485
(87) International publication number: WO 2010/041682

(57) **Abstract**

In message exchange, to notify other party of communication of a user status related to other software which is activated from the software used for the message exchange. In a client (10), a message processing unit (13) implemented by IM outputs activated application information related to the application activated by a user operation accepted by an operation accepting unit (12) and IM status information indicating the status of a message in the IM, and a window monitoring unit (16) monitors the windows displayed on a display unit (14) and outputs window status information indicating the statuses of the windows. In the case where these pieces of information satisfy a condition defined in a rule definition stored in a rule storing unit (15), a rule interpreting unit (17) returns a status message defined in association with the condition to the message processing unit (13) so that the other client is notified of the message via a communication unit (11).

## Description

### Field of the Invention

The present invention relates to an apparatus and method for notifying of a status of a user. More particularly, the present invention relates to an apparatus and method for notifying another apparatus of a status of a user who uses the apparatus to perform message exchange with another user who uses the other apparatus.

### Background of the Invention

In recent years, chat software such as IM (Instant Messenger) and the like is used in various scenes for message exchange.
Examples of the tools for message exchange include electronic mails and electronic bulletin boards, with which a message is sent unilaterally and a reply is awaited regardless of whether the other party of communication is available or not, and thus, it may take a long time until the user receives the reply for example in the case where the other party is away from the keyboard. In contrast, the chat software ensures relatively real-time message exchanges. Because of such real-time communication property of the chat software, however, the user using the chat software may want to know the current status of the other party of communication.
To this end, in the field of instant messaging, a technique of displaying presence information showing the status of the other party of communication, like whether the other party is on the phone, available, or away, has been proposed (see, e.g., Patent Document 1).

[Patent Document 1]
   Japanese Unexamined Patent Publication (Kokai) No. 2006-293699

### Summary of the Invention

As described above, the technique of displaying presence information of the other party of communication is already known.
Displaying only the presence information of the other party of communication, however, is insufficient because, even if it is possible to confirm that the other party is online and available, it is impossible to know whether the other party is doing any work related to the message exchange or doing nothing. For example, in the case where one is doing work related to the message exchange using other software and, hence, late in replying, the other party in the message exchange will not know it.

In view of the foregoing, an object of the present invention is to notify the other party in message exchange of a status of the user which is related to other software that is activated from the software used for the message exchange.

To achieve the above object, the present invention provides an apparatus for notifying another apparatus of a status of a user, the user using the apparatus to perform message exchange with another user using the other apparatus, wherein the apparatus includes: a storing unit which stores association information in which user status information indicating the status of the user is associated with a second software that is different from the first software operated by the user for the message exchange; and a notification unit which, upon activation of the second software by an operation of the user on the first software, notifies the other apparatus of the user status information associated with the second software in the association information.

Here, the storing unit may store the association information in which the user status information is further associated with a condition regarding a status of a window for the second software, and the notification unit may notify the other apparatus of the user status information in the case where the status of the window for the second software activated by the operation of the user on the first software satisfies the condition regarding the status of the window defined in the association information. In this case, the condition regarding the status of the window may include a condition that a user operation is being performed on the window for the second software. Alternatively, the condition regarding the status of the window may include a condition that a user operation is not being performed on the window for the second software.

Further, the storing unit may store the association information in which the user status information is further associated with a condition regarding a status of a window for the second software and a condition regarding a status of a message in the first software, and the notification unit may notify the other apparatus of the user status information in the case where the status of the window for the second software activated by the operation of the user on the first software satisfies the condition regarding the status of the window defined in the association information and the status of the message in the first software satisfies the condition regarding the status of the message defined in the association information. In this case, the condition regarding the status of the window may include a condition that user operations are being performed on a window for the first software and the window for the second software, and the condition regarding the status of the message may include a condition that a message is being input to the first software. Alternatively, the condition regarding the status of the window may include a condition that a user operation is being performed on the window for the second software, and the condition regarding the status of the message may include a condition that a message is not being input to the first software.
Furthermore, the user status information may indicate a status regarding a user operation on at least one of the first software and the second software.

The present invention also provides an apparatus for notifying another apparatus of a status of a user, the user using the apparatus to perform message exchange with another user using the other apparatus, wherein the apparatus includes: a storing unit which stores association information in which user status information indicating the status of the user is associated with a second software that is different from the first software operated by the user for the message exchange, a first condition regarding a status of a window for the second software, and a second condition regarding a status of a message in the first software; and a notification unit which, upon activation of the second software by an operation of the user on the first software, notifies the other apparatus of the user status information associated with the second software, the first condition, and the second condition in the association information, in the case where the status of the window for the second software satisfies the first condition defined in the association information and the status of the message in the first software satisfies the second condition defined in the association information.

The present invention also provides an apparatus for notifying another apparatus of a status of a user, the user using the apparatus to perform message exchange with another user using the other apparatus, wherein the apparatus includes: a storing unit which stores association information in which a second software that is different from the first software operated by the user for the message exchange, a first condition that user operations are being performed on a window for the first software and a window for the second software, a second condition that a message is being input to the first software, and user status information indicating a status that the user is inputting a message using the first software while viewing a document using the second software are associated with each other; and a notification unit which, upon activation of the second software by an operation of the user on the first software, notifies the other apparatus of the user status information that is associated with the second software, the first condition, and the second condition in the association information, in the case where the statuses of the window for the first software and the window for the second software satisfy the first condition defined in the association information and the status of the message in the first software satisfies the second condition defined in the association information.

Further, the present invention provides a method for notifying a status of a user, the user using an apparatus to perform message exchange with another user using the other apparatus, to the other apparatus, wherein the method includes the steps of: storing association information in which user status information indicating the status of the user is associated with second software that is different from first software operated by the user for the message exchange; and upon activation of the second software by an operation of the user on the first software, notifying the other apparatus of the user status information associated with the second software in the association information.

Furthermore, the present invention provides a program for causing a computer to function as an apparatus for notifying another apparatus of a status of a user, the user using the apparatus to perform message exchange with another user using the other apparatus, wherein the program causes the computer to function as: a reading unit which reads, into a memory, association information in which user status information indicating the status of the user is associated with a second software that is different from the first software operated by the user for the message exchange; and an output unit which, in response to a notification received from the first software that the second software has been activated by an operation of the user on the first software, outputs the user status information associated with the second software in the association information to the first software so that the other apparatus is notified of the user status information.

According to the present invention, it is possible to notify the other party in the message exchange of the status of the user related to other software which is activated from the software used for the message exchange.

### Brief Description of the Drawings

Fig. 1 shows an overall configuration of a computer system according to an embodiment of the present invention;
Fig. 2 shows a functional configuration of a client according to the embodiment of the present invention;
Fig. 3 shows a rule definition for use in the embodiment of the present invention;
Fig. 4 is a flowchart illustrating an operation of a message processing unit in the client of the embodiment of the present invention;
Fig. 5 is a flowchart illustrating an operation of a window monitoring unit in the client of the embodiment of the present invention;
Fig. 6 is a flowchart illustrating an operation of a rule interpreting unit in the client of the embodiment of the present invention;
Figs. 7A, 7B, and 7C show examples of the information obtained or generated by the rule interpreting unit in the client of the embodiment of the present invention;
Fig. 8 is a flowchart illustrating a detailed operation for status matching processing which is performed by the rule interpreting unit in the client of the embodiment of the present invention; and
Fig. 9 shows a hardware structure of a computer to which the embodiment of the present invention is applicable.

### Detailed Description of the Invention

A best mode for carrying out the present invention (hereinafter, referred to as the "embodiment") will now be described in detail with reference to the accompanying drawings.
Firstly, a computer system to which the present embodiment is applied will be described. In the present embodiment, IM is shown as an example of the chat software.

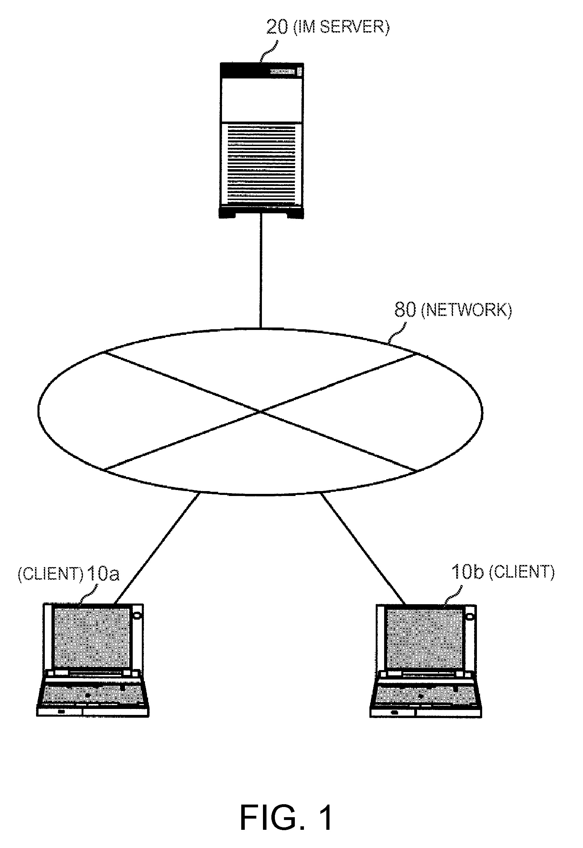

Fig. 1 shows by way of example an overall configuration of the computer system.
As shown in the figure, the computer system includes a client 10a, a client 10b, and an IM server 20, which are connected to each other via a network 80.

The clients 10a and 10b are terminal devices such as personal computers (PCs) used by the users. More specifically, the clients are each a terminal device used by a user to exchange messages with another user. Although two clients are shown in the figure, there may be three or more clients. In the following, the client 10a, 10b may simply be referred to as the "client 10" when the distinction is unnecessary.
The IM server 20 is a server computer which manages message exchange by IM via the network 80. For example, in response to requests for participation in the same IM session from the client 10a operated by a user A and the client 10b operated by a user B, the IM server 20 manages identification information of the IM session, identification information of the users A and B, and identification information of the clients 10a and 10b. Further, in response to input of a message from the user A or B, the IM server 20 controls such that the message is transmitted to the client 10 of the other party.
The network 80 is communication means used for message exchange. The network 80 may be the Internet or a LAN (Local Area Network) .

In the computer system having the above-described configuration, in the present embodiment, an IM status agent is installed in each client 10. The IM status agent determines a status of a user (or, a user status) from information regarding the user's activity related to the IM (hereinafter, referred to as the "user activity information"), and displays the determined user status on the client 10 of the other party, to ensure smoother communication between the users.

The user activity information includes: IM status information; activated application information (activated AP information); and window status information.
Among them, the IM status information indicates a status of a message in the IM. For example, it indicates an input status of a message text to the IM (i.e., whether the message text is being input).
The activated AP information shows an application which is activated by a user operation on the IM. This information includes, e.g., a name of the activated application, and a process ID which uniquely identifies the process generated as a result of activation of the application.
The window status information indicates a status of a window for the application activated by the user operation on the IM. Specifically, it shows, e.g., a focus status of the window (i.e., whether a user operation is being performed on the window), and a status of switch of focus between windows (i.e., whether the user operations are being performed on the window and another window).

The user status to be displayed on the client 10 of the other party is transmitted in the form of a status message. As will be described later, the status message is defined as a rule in association with the definitions regarding the IM status information and the window status information. In the present embodiment, the status message is used as an example of the user status information indicating the status of the user. As used herein, the "status of the user" refers to the status related to the user operation on the software activated in the client 10, wherein the software may be either or both of the IM and an application activated from the IM.

Now, the client 10 which operates in the above-described manner will be described in detail.
Firstly, the functional configuration of the client 10 will be described.

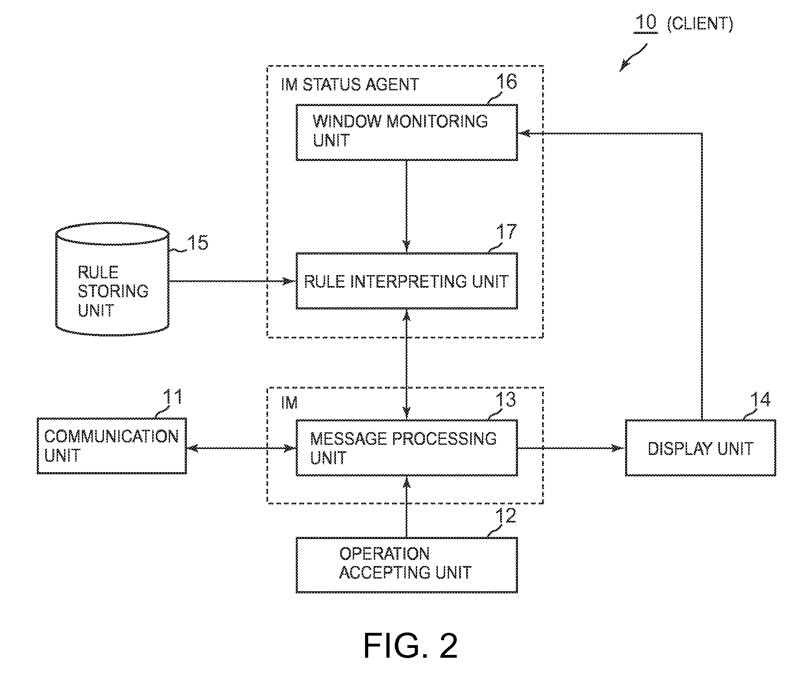

Fig. 2 is a block diagram showing an example of the functional configuration of the client 10.
As shown in the figure, the client 10 includes a communication unit 11, an operation accepting unit 12, a message processing unit 13, a display unit 14, a rule storing unit 15, a window monitoring unit 16, and a rule interpreting unit 17.

The communication unit 11 transmits and receives messages to and from the client 10 of the other party of communication. In the present embodiment, the communication unit 11 is shown as an example of the notification unit which notifies the user status information.
The operation accepting unit 12 accepts a user operation, such as a keyboard operation, mouse operation, and the like, on the client 10.
The message processing unit 13, which is a function implemented as the CPU in the client 10 executes the IM program, performs processing related to messages, such as message exchange with another client 10.
Upon activation of the message processing unit 13, the display unit 14 displays a window for the IM, a message, and others, whereas upon activation of another application from the message processing unit 13, the display unit 14 displays a window for that application.

The rule storing unit 15 stores, for each application which may be activated from the IM, a rule definition in which a definition of a condition regarding the status of the message in the IM (hereinafter, referred to as the "IM status definition") and a definition of a condition regarding the status of the window for the application (hereinafter, referred to as the "window status definition") are associated with each other. In the present embodiment, the IM is shown as an example of the first software that is operated by the user for the message exchange, and the application which may be activated from the IM is shown as an example of the second software that is different from the first software. Further, the rule storing unit 15 is shown as an example of the storing unit which stores association information in which the user status information is associated with the second software.

The window monitoring unit 16 and the rule interpreting unit 17 are the functions which are implemented as the CPU in the client 10 executes the IM status agent program. They check the IM status information and the window status information at regular intervals, and if the checked result matches a rule included in the rule definitions stored in the rule storing unit 15, they output the status message defined in that rule to the message processing unit 13.
Specifically, the window monitoring unit 16 monitors the windows displayed on the display unit 14 to check the windows the user is working on.
The rule interpreting unit 17 reads the rule definitions from the rule storing unit 15, and determines whether the IM status information and the window status information match the IM status definition and the window status definition, respectively. If they both match, the rule interpreting unit 17 retrieves and passes the status message associated with the IM status definition and the window status definition to the message processing unit 13. In the present embodiment, the rule interpreting unit 17 is shown as an example of the reading unit which reads into a memory the association information in which the user status information is associated with the second software and also as an example of the output unit which outputs the user status information to the first software.

Although the IM status agent is shown separately from the IM in the figure, the IM status agent may be included in the IM software as plug-in software and the like.

Now, the rule definition stored in the rule storing unit 15 will be described.

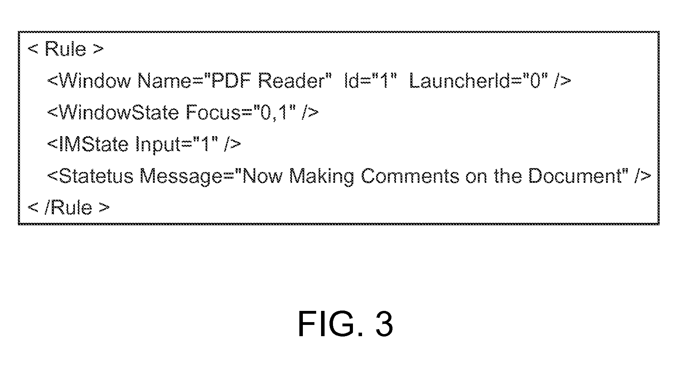

Fig. 3 shows a specific example of the rule definition stored in the rule storing unit 15. In the figure, the example of the rule definition is described in a markup language format (for example, XML) for convenience of explanation.
The example of the rule definition in the present embodiment is a collection of action rule definitions for the IM status agent (hereinafter, simply referred to as the "action rule definitions"). <Rule> to </Rule> constitute a unit of the action rule definitions, which coincides with a unit of processing executed by the rule interpreting unit 17. The action rule definitions include the following definitions, which are included in the rule definition for the purposes of associating the user activity information with the status messages.

Firstly, the action rule definitions include a window definition, which is defined as a Window element. The window definition defines information which specifies the window (hereinafter, referred to as the "object window") on which a user activity indicated by the user activity information that is associated with a status message is performed.
The Window element may define the following attributes, with "*" indicating a mandatory attribute:
- Name*: a character string showing the application name (regular expression may also be used).
- Id*: a window ID for identification of the object window, used in the window status definition and others. Here, the Id takes the numerical value other than "0", because the window ID "0" is applied to the IM window.
- LauncherId: a window ID of the window for the application (launcher) that activated another application. In the absence of this definition, the launcher is regarded as arbitrary.

In the figure, the window for "PDF Reader", which is the application activated from the IM (with the window ID "0"), has a window ID defined as "1".
Another description as follows is possible, wherein the window for "Web Browser", which is another application activated from the application that is opening the window with the window ID "1", has a window ID defined as "2": <Window Name="Web Browser" Id="2" LauncherId="1"/>.

Secondly, the action rule definitions include a window status definition, which is defined as a WindowState element. The window status definition defines a condition regarding the status of the object window.
The WindowState element may define the following attributes, with definition of either Focus or Visible being mandatory:
- Focus: a list of window IDs for the windows among which focus is switched. A negation symbol may be added to the list to define a condition that all of the windows having the window IDs in the list are not focused. Alternatively, the negation symbol may be added to any of the window IDs in the list to define a condition that the window having the corresponding window ID is not focused.
- Visible: a list of window IDs for the windows which remain open, instead of being minimized to icons and the like. The negation symbol may be added to the list to define a condition that all of the windows having the window IDs in the list are minimized to icons. Alternatively, the negation symbol may be added to any of the window IDs in the list to define a condition that the window having the corresponding window ID is minimized to an icon.
Here, the list includes the window IDs separated by commas. If there is "0" in the list, it represents the window for the IM. For the negation symbol, any symbol, "!" for example, may be used.

Defined in the figure is the status in which focus is switched between the window for the IM (with the window ID "0") and the window for the PDF viewing software "PDF Reader" (with the window ID "1").
Another description as follows is possible, which defines the status in which the IM window (with the window ID "0") and the window with the window ID "2" are open, without being minimized to icons, and focus is switched between the windows with the window IDs "1" and "4": <WindowState Visible="0,2" Focus="1,4"/>

Thirdly, the action rule definitions include an IM status definition, which is defined as an IMState element. The IM status definition defines the condition related to the status of the IM application.
The IMState element may define the following attributes:
- Input: a numerical value indicating whether a message is being input to the IM. For example, it takes either "0" (not being input) or "1" (being input).
- Presence: a numerical value indicating the presence status of the IM. Typical presence statuses may be defined, e.g., as: 0 - Active (possible to answer), 1 - Away (away from keyboard), 2 - Idle (no operation), 3 - Inactive (impossible to answer), and others, although the numerical values may vary depending on the types of the IM.

Shown in the figure is the status in which the message is being input to the IM.
Another description as follows is possible, which defines that the presence status of the IM is Idle and the message is being input:
<IMState Presence="2" Input="1"/>

Fourthly, the action rule definitions include an IM status modification definition, which is defined as a Status element. The IM status modification definition defines an IM status to which the status is to be modified in the case where the actual status satisfies the condition defined in the rule definition. In the present embodiment, particularly, it includes the definition of a status modification instruction (to update a status message and the like), which is notified to the IM when the status matches the rule.
The Status element may define the following attributes:
- Message: a character string which instructs modification of the status message of the IM. It defines the status message itself.
- Presence: a numerical value which instructs modification of the presence status of the IM. Typical presence statuses may be defined, e.g., as: 0 - Active (possible to answer), 1 - Away (away from keyboard), 2 - Idle (no operation), 3 - Inactive (impossible to answer), and others, although the numerical values may vary depending on the types of the IM. In the absence of this definition, the presence status is not changed.

In the figure, it is defined such that the IM status message is changed to "Now Making Comments on the Document" when the status matches the condition defined in the rule definition.

The example of the rule definition shown in Fig. 3 is applicable, e.g., to the following scenario:
(1) A PDF file is transmitted by the file transmitting function of the IM.
(2) The user performs an operation to open the PDF file on the IM, for example, to activate the PDF viewing software "PDF Reader". At this time, the IM passes the process ID for the activated PDF viewing software to the IM status agent.
(3) The IM status agent monitors the foreground window, i.e., the window on which the user is working, at regular intervals.
(4) As a result, the foreground window is the window for the PDF viewing software (with window ID "1") or the window for the IM (with window ID "0"). Here, whether the window for the PDF viewing software has been activated from the IM is confirmed with the process ID passed from the IM in (2) above. The above-described status of the windows satisfies the condition described in the WindowState element in the rule definition.
(5) Further, the text is input into the input window for the IM. This status satisfies the condition described in the IMState element in the rule definition.
(6) The IM status agent notifies the IM of an instruction to change the status message to: "Now Making Comments on the Document", according to the Status element in the rule definition.

An operation of the present embodiment will now be described. While the rule definition in Fig. 3 allows setting of values other than "0" as the LauncherId attribute in the Window element, it is assumed in the following that only "0" can be set therefor, for ease of explanation. Further, while the rule definition in Fig. 3 allows definition of both the Focus attribute and the Visible attribute in the WindowState element, it is assumed in the following that only the Focus attribute can be defined therefor, again for ease of explanation.

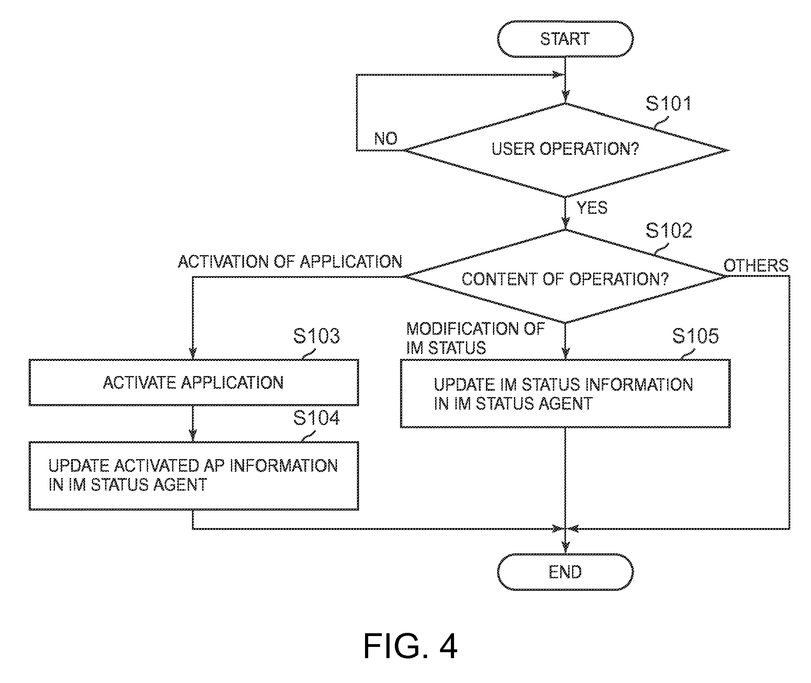

Fig. 4 is a flowchart illustrating an example of the operation of the message processing unit 13 in the present embodiment.
Firstly, the message processing unit 13 determines whether a notification that there was a user operation has been received from the operation accepting unit 12 (step 101). It repeats step 101 until such a notification is received, and once it receives the notification, it determines the content of the user operation (step 102).

Assume it is determined that the user operation is the one for activating an application.
In this case, the message processing unit 13 activates the designated application (step 103). It then notifies the rule interpreting unit 17 of activated AP information related to the activated application, for example by storing the information in a memory which is used for storing the activated AP information and which is accessible by the rule interpreting unit 17 (step 104). Here, it is assumed that the message processing unit 13 is able to recognize the type of the activated application, and the application name is included in the activated AP information. Further, the process ID for identification of a process generated as a result of activation of the application is also included in the activated AP information.

Assume it is determined that the user operation is the one for modifying the status of the IM.
In this case, the message processing unit 13 notifies the rule interpreting unit 17 of the IM status information, for example by storing the information in a memory used for storing the IM status information, which can be accessed by the rule interpreting unit 17 (step 105). Here, the IM status information may be the one indicating that a text is being input to the IM.
In the case where it is determined that the content of the user operation is other than described above, processing is performed in accordance with that user operation before termination of the process. The processing based on the user operation is irrelevant to the present invention, and thus, description thereof will not be provided here.

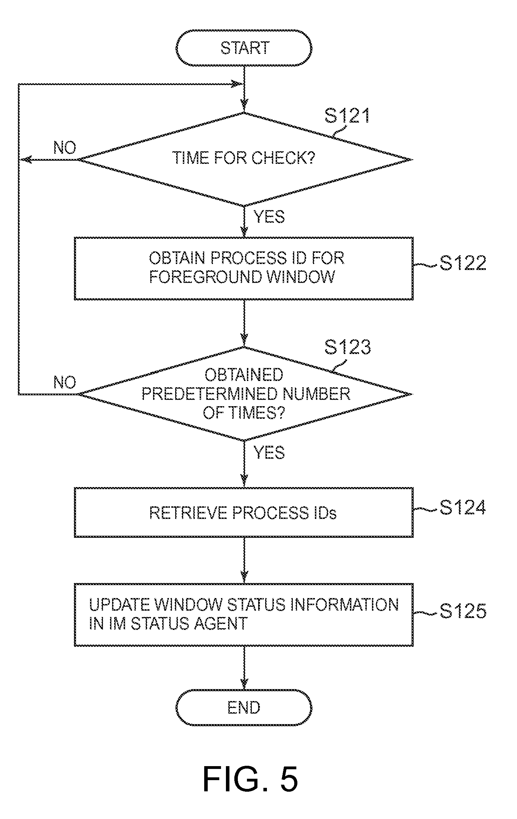

Fig. 5 is a flowchart illustrating an example of the operation of the window monitoring unit 16 in the present embodiment.
Firstly, the window monitoring unit 16 determines whether it is time to check the windows (step 121). If it is not the time, it repeats step 121 until the time comes. If it is the time to check the windows, the window monitoring unit 16 obtains and stores in a memory the process ID of the application that opened the foreground window among the windows displayed on display unit 14 (step 122). To specify the foreground window among the windows displayed on the display unit 14, an API function of GetForegroundWindow, for example, may be used. Thereafter, the window monitoring unit 16 determines whether the process ID for the foreground window has been obtained a predetermined number of times (step 123).

As a result, if the process ID for the foreground window has not been obtained the predetermined number of times yet, steps 121 to 123 are repeated.
If the process ID for the foreground window has been obtained the predetermined number of times, the process IDs obtained in step 122 up to that point are retrieved from the memory (step 124). It then notifies the rule interpreting unit 17 of the obtained process IDs, by storing them in a memory which is used for storing the window status information and accessible by the rule interpreting unit 17 (step 125).

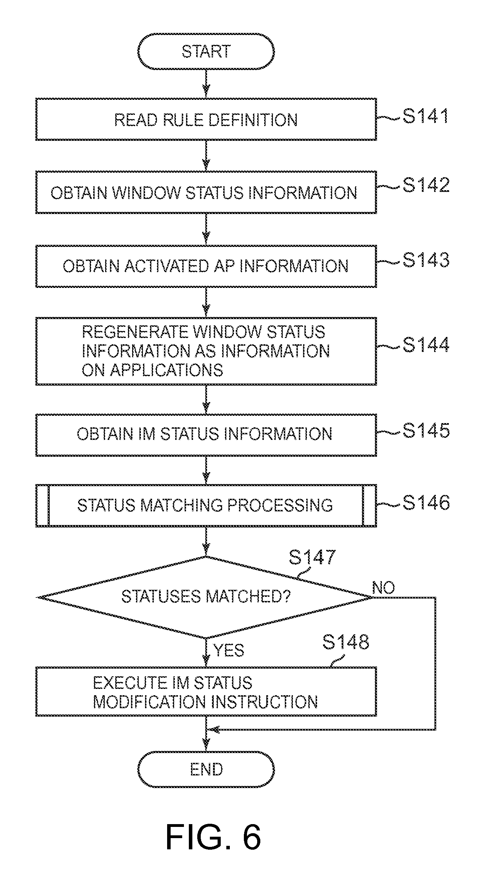

Fig. 6 is a flowchart illustrating an example of the operation of the rule interpreting unit 17 in the present embodiment. It is noted that prior to this operation, the message processing unit 13 has stored the activated AP information and the IM status information, and the window monitoring unit 16 has stored the window status information, in the corresponding memories accessible by the rule interpreting unit 17.
Firstly, the rule interpreting unit 17 reads the rule definition from the rule storing unit 15 (step 141).
Next, the rule interpreting unit 17 obtains the window status information that the window monitoring unit 16 stored in the memory (step 142). Here, the window status information includes the process IDs of the applications that have opened the windows that the user is currently working on.

The rule interpreting unit 17 also obtains the activated AP information that the message processing unit 13 stored in the memory (step 143). Here, the activated AP information includes the application names and the process IDs.
Next, the rule interpreting unit 17 replaces the process IDs included in the window status information obtained in step 142 with the application names by referring to the activated AP information obtained in step 143, to regenerate the window status information (step 144). Assuming that the IM status agent has acquired the process ID of the IM upon activation thereof, if that process ID is among the process IDs included in the window status information, the rule interpreting unit 17 replaces that process ID with the application name "IM". Further, if the process ID included in the activated AP information obtained in step 143 is not among the process IDs included in the window status information, the rule interpreting unit 17 replaces that process ID with a blank, for example, to indicate that the windows the user is currently working on include a window that was activated from an application other than the IM.
Further, the rule interpreting unit 17 obtains the IM status information that the message processing unit 13 stored in the memory (step 145).

Thereafter, the rule interpreting unit 17 performs matching between the window status information and the window status definition, and between the IM status information and the IM status definition (step 146). It then determines whether the window status information and the IM status information match the window status definition and the IM status definition, respectively (step 147).
If they both match, the rule interpreting unit 17 transmits an IM status modification instruction to the message processing unit 13, in accordance with the IM status modification definition included in the rule definition read in step 141 (step 148). The IM status modification instruction may be, e.g., an instruction to change the IM status message to the one that is associated with the window status definition and the IM status definition. When the IM status message is transmitted to the message processing unit 13 according to the above operation, the message processing unit 13 passes the status message to the communication unit 11, which in turn transmits it to another client 10.
On the other hand, if either one does not match, the process is terminated, without transmitting the IM status modification instruction to the message processing unit 13.

Now, the information obtained in step 142, obtained in step 143, and generated in step 144 will be described with reference to specific examples.

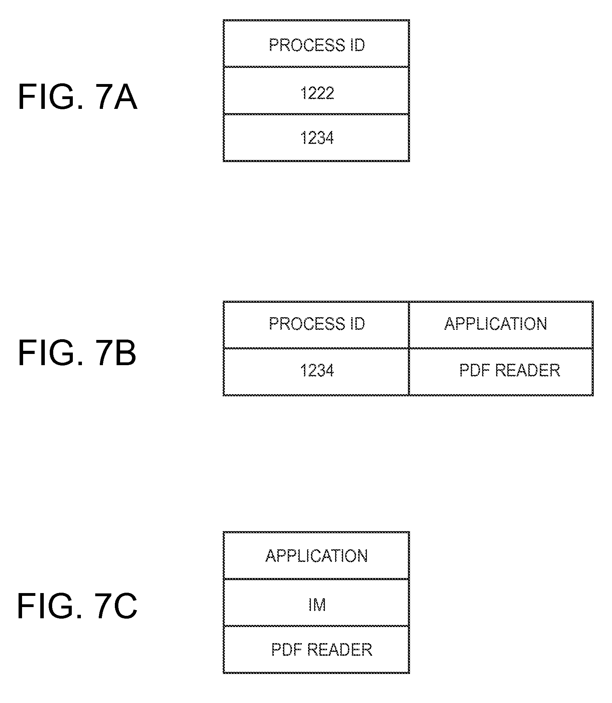

Fig. 7A shows a specific example of the information obtained in step 142.
Here, it is assumed that focus is switched between two windows, and the process IDs of the applications that opened the respective windows are shown in the form of a table. Of the process IDs, "1222" is the process ID for the IM, and "1234" is the process ID for "PDF Reader".

Fig. 7B shows a specific example of the information obtained in step 143.
Here, it is assumed that "PDF Reader" has been activated, and the correspondence between the process ID "1234" and the application name "PDF Reader" is shown in the form of a table.

Fig. 7C shows a specific example of the information generated in step 144.
Firstly, because the IM status agent knows that the process ID "1222" in Fig. 7A is the process ID of the IM, it replaces "1222" in the first row in Fig. 7A with "IM". Further, by referring to the correspondence between the process ID and the application name in Fig. 7B, it replaces the process ID "1234" in the second row in Fig. 7A with "PDF Reader". As a result, the window status information is regenerated in the form of a table showing the application names of the applications that opened the windows between which focus is switched.

The status matching processing in step 146 in Fig. 6 is carried out on the assumption that the window status information as shown in Fig. 7C has been generated as described above.

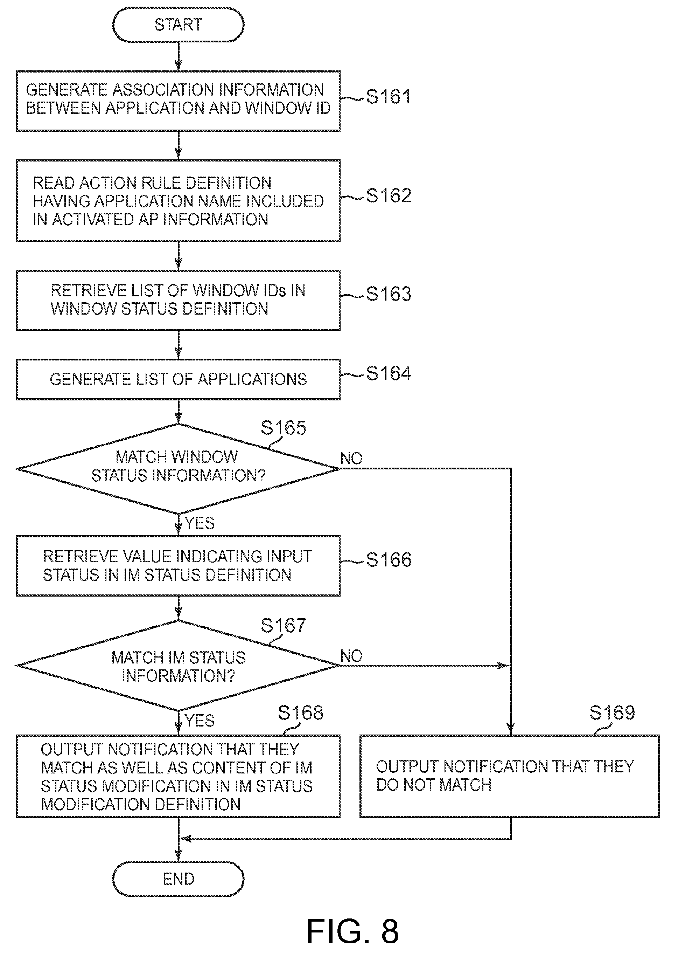

Fig. 8 is a flowchart illustrating an example of the operation in the matching processing.
Firstly, the rule interpreting unit 17 generates association information between the application name and the window ID, according to the window definition which is included in the rule definition read in step 141 in Fig. 6 (step 161). For example, assuming that the action rule definition as shown in Fig. 3 has been read, the association information between the application name "PDF Reader" and the window ID "1" is generated. If there is another action rule definition, the association information between the application name and the window ID is generated by referring to the other action rule definition as well.

Next, the rule interpreting unit 17 reads the action rule definition in which the application name included in the activated AP information obtained in step 143 in Fig. 6 is described (step 162).
Further, the rule interpreting unit 17 retrieves the list of window IDs included in the Focus attribute in the window status definition (step 163). It then specifies the application corresponding to a respective window ID in the list, to generate a list of applications (step 164). If the window ID is "0", the application is "IM". If the window ID is other than "0", the application is specified based on the association information between the application name and the window ID generated in step 161. For example, the rule definition shown in Fig. 3 includes the list of window IDs of "0" and "1". Here, the IM is specified as the application from the window ID "0", and the application "PDF Reader" is specified from the window ID "1", based on the association information generated in step 161.

Thereafter, the rule interpreting unit 17 determines whether the applications included in the list of applications generated in step 164 match the applications included in the window status information generated in step 144 (step 165).
If they match, the rule interpreting unit 17 obtains the value that is set in the Input attribute in the IM status definition (step 166). It then determines whether the status indicated by that value matches the status indicated by the IM status information obtained in step 145 (step 167).
If they match, the rule interpreting unit 17 outputs a notification that they match as well as the IM status modification instruction described in the IM status modification definition (step 168). In the present embodiment, particularly, the instruction to change the IM status message is output.
On the other hand, if the result of matching is "NO" in step 165 or 167, the rule interpreting unit 17 outputs a notification that they do not match to the message processing unit 13 (step 169).

While the negation symbol described in conjunction with the rule definition in Fig. 3 above has not been considered in this operation example, the operation may take account of the negation symbol.
For example, in the case where a negation symbol is added to the list of the window IDs, it may be determined in step 165 whether the condition that the window status information generated in step 144 (e.g., the information shown in Fig. 7C) does not include any of the applications included in the list generated in step 164 is satisfied. If the condition is satisfied, the process may proceed to step 166; otherwise, the process may proceed to step 169.

Further, in the case where a negation symbol is added to one or more of the window IDs in the list, it may be determined in step 165 as follows: In the list of applications generated in step 164, for the application having the window ID not added with the negation symbol, it may be determined whether the condition that the application is included in the window status information generated in step 144 (e.g., the information shown in Fig. 7C) is satisfied, while for the application having the window ID added with the negation symbol, it may be determined whether the condition that the application is not included in the window status information generated in step 144 (e.g., the information shown in Fig. 7C) is satisfied. If every one of the applications on the list satisfies the corresponding one of the former and latter conditions, the process may proceeds to step 166; whereas if any one of the applications in the list fails to satisfy the corresponding condition, the process may proceed to step 169.

It is noted that the matching algorithm described above with reference to Figs. 7 and 8 is only illustrative; any other matching algorithm may be adopted.

The embodiment of the present invention has been described above in detail.
In the present embodiment, in the case where the focus is switched between the window for the IM and the window for the "PDF Reader" and a message is being input to the IM, the status message "Now Making Comments on the Document" is output to indicate that the user is inputting a message to the IM while viewing the document using "PDF Reader". However, various other situations are conceivable as to what kind of status message is to be output when what kind of condition is satisfied.
For example, it may be configured such that a condition of Focus="1" and Input="0" is defined in advance and, when the condition is satisfied, a status message indicating that the user is viewing the document using "PDF Reader" before inputting a message to the IM is output.

Further, another situation not taking account of the condition regarding the status of the message in the IM is conceivable.
For example, it may be configured such that a condition of Focus="1" alone is defined in advance and, upon satisfaction of the condition, a status message indicating that the user is doing work using "PDF Reader" for the purpose of message exchange is output.
Alternatively, it may be configured to define a condition of Focus=!"1" ("!" is the negation symbol) alone and, in response to satisfaction of the condition, to output a status message indicating that the user is not doing work using "PDF Reader" for the message exchange.

Still another situation not taking account of the condition regarding the status of the window is conceivable as well.
In this case, the user status information showing the user status may be stored in association with "PDF Reader" in advance and, when "PDF Reader" is activated from the IM, the associated user status information may be output.

Further, it has been assumed in the present embodiment that the data transmitted by the IM is a PDF file and the PDF viewing software is activated from the IM for viewing the PDF file. However, this is only illustrative; the data transmitted by the IM may be of any format and may be viewed using any software.
Furthermore, while it has been assumed in the present embodiment that the user exchanges messages with only one party, in the case where the user chats with a plurality of parties individually, the above-described process may be performed on a respective chat session.

As described above, in the present embodiment, the condition regarding the window status and the condition regarding the message in the IM, and the status message indicating the user status are associated with each other for each of the applications that may be activated from the IM, and in the case where an actual status satisfies the conditions, the status message is output. This provides the other party of communication with the presence information, not of the type such as "on the phone", "available", "away", and the like, but from the standpoint of whether the user is doing work related to the chat using the software activated from the IM.
Further, in most cases, obtaining the user activity information requires only modification of the IM software and use of the function of the window system, without the need of modification of the applications.

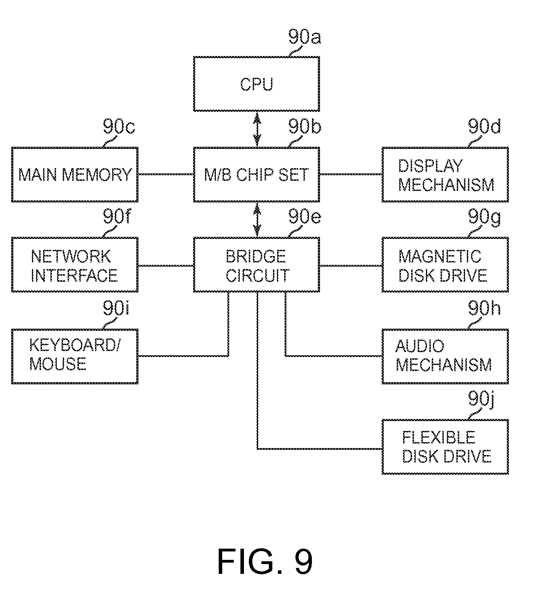

Lastly, a hardware structure of a computer suitable for implementing the present embodiment will be described. Fig. 9 shows an example of the hardware structure of such a computer. As shown in the figure, the computer includes a CPU (Central Processing Unit) 90a serving as calculating means, a main memory 90c connected to the CPU 90a via an M/B (motherboard) chip set 90b, and a display mechanism 90d connected to the CPU 90a again via the M/B chip set 90b. Further, a network interface 90f, a magnetic disk drive (hard disk drive: HDD) 90g, an audio mechanism 90h, a keyboard/mouse 90i, and a flexible disk drive 90j are connected to the M/B chip set 90b via a bridge circuit 90e.

In Fig. 9, the components are connected via buses. For example, the CPU 90a and the M/B chip set 90b, and the M/B chip set 90b and the main memory 90c are connected via a CPU bus. While the M/B chip set 90b and the display mechanism 90d may be connected via an AGP (Accelerated Graphics Port), if the display mechanism 90d includes a PCI Express-capable video card, the M/B chip set 90b and the video card are connected via a PCI Express (PCIe) bus. Further, for connection with the bridge circuit 90e, PCI Express, for example, may be used for the network interface 90f. For the magnetic disk drive 90g, serial ATA (AT Attachment), parallel ATA, or PCI (Peripheral Components Interconnet) may be employed. Further, a USB (Universal Serial Bus) may be used for the keyboard/mouse 90i and the flexible disk drive 90j.

The present invention may be implemented entirely with hardware or entirely with software. Alternatively, it may be implemented with both the hardware and the software. Further, the present invention may be implemented as a computer, a data processing system, or a computer program. The computer program may be provided as being stored in a computer readable medium. The medium may be an electronic, magnetic, optical, electromagnetic, infrared, or semiconductor system (or apparatus or device), or a propagation medium. Further, the computer readable medium may be a semiconductor or solid state memory, a magnetic tape, a removable computer diskette, a random access memory (RAM), a read only memory (ROM), a rigid magnetic disk, or an optical disk. Current examples of the optical disk include a compact disk-read only memory (CD-ROM), a compact disk-read/write (CD-R/W), and a digital versatile disk (DVD).

While the present invention has been described with reference to the embodiment, the description of the embodiment above does not restrict the technical scope of the present invention. Those skilled in the art will appreciate that various modifications and substitutions are possible, without departing from the scope and spirit of the invention.

## Claims

1. An apparatus for notifying another apparatus of a status of a user, the user using the apparatus to perform message exchange with another user using the other apparatus, comprising:
a storing unit which stores association information in which user status information indicating the status of the user is associated with a second software that is different from the first software operated by the user for the message exchange; and
a notification unit which, upon activation of the second software by an operation of the user on the first software, notifies the other apparatus of the user status information associated with the second software in the association information.

2. The apparatus according to claim 1, wherein
the storing unit stores the association information in which the user status information is further associated with a condition regarding a status of a window for the second software, and
the notification unit notifies the other apparatus of the user status information in the case where the status of the window for the second software activated by the operation of the user on the first software satisfies the condition regarding the status of the window defined in the association information.

3. The apparatus according to claim 1, wherein the condition regarding the status of the window includes a condition that a user operation is being performed on the window for the second software.

4. The apparatus according to claim 1, wherein the condition regarding the status of the window includes a condition that a user operation is not being performed on the window for the second software.

5. The apparatus according to claim 1, wherein
the storing unit stores the association information in which the user status information is further associated with a condition regarding a status of a window for the second software and a condition regarding a status of a message in the first software, and
the notification unit notifies the other apparatus of the user status information in the case where the status of the window for the second software activated by the operation of the user on the first software satisfies the condition regarding the status of the window defined in the association information and the status of the message in the first software satisfies the condition regarding the status of the message defined in the association information.

6. The apparatus according to claim 5, wherein
the condition regarding the status of the window includes a condition that user operations are being performed on a window for the first software and the window for the second software, and
the condition regarding the status of the message includes a condition that a message is being input to the first software.

7. The apparatus according to claim 5, wherein
the condition regarding the status of the window includes a condition that a user operation is being performed on the window for the second software, and
the condition regarding the status of the message includes a condition that a message is not being input to the first software.

8. The apparatus according to claim 1, wherein the user status information indicates a status regarding a user operation on at least one of the first software and the second software.

9. An apparatus for notifying another apparatus of a status of a user, the user using the apparatus to perform message exchange with another user using the other apparatus, comprising:
a storing unit which stores association information in which user status information indicating the status of the user is associated with a second software that is different from the first software operated by the user for the message exchange, a first condition regarding a status of a window for the second software, and a second condition regarding a status of a message in the first software; and
a notification unit which, upon activation of the second software by an operation of the user on the first software, notifies the other apparatus of the user status information associated with the second software, the first condition, and the second condition in the association information, in the case where the status of the window for the second software satisfies the first condition defined in the association information and the status of the message in the first software satisfies the second condition defined in the association information.

10. An apparatus for notifying another apparatus of a status of a user, the user using the apparatus to perform message exchange with another user using the other apparatus, comprising:
a storing unit which stores association information in which a second software that is different from the first software operated by the user for the message exchange, a first condition that user operations are being performed on a window for the first software and a window for the second software, a second condition that a message is being input to the first software, and user status information indicating a status that the user is inputting a message using the first software while viewing a document using the second software are associated with each other; and
a notification unit which, upon activation of the second software by an operation of the user on the first software, notifies the other apparatus of the user status information that is associated with the second software, the first condition, and the second condition in the association information, in the case where the statuses of the window for the first software and the window for the second software satisfy the first condition defined in the association information and the status of the message in the first software satisfies the second condition defined in the association information.

11. A method for notifying another apparatus of a status of a user, the user using an apparatus to perform message exchange with another user using the other apparatus, comprising the steps of:
storing association information in which user status information indicating the status of the user is associated with a second software that is different from the first software operated by the user for the message exchange; and
upon activation of the second software by an operation of the user on the first software, notifying the other apparatus of the user status information associated with the second software in the association information.

12. A program for causing a computer to function as an apparatus for notifying another apparatus of a status of a user, the user using the apparatus to perform message exchange with another user using the other apparatus, the program causing the computer to function as:
a reading unit which reads, into a memory, association information in which user status information indicating the status of the user is associated with a second software that is different from the first software operated by the user for the message exchange; and
an output unit which, in response to a notification input from the first software that the second software has been activated by an operation of the user on the first software, outputs the user status information associated with the second software in the association information to the first software so that the other apparatus is notified of the user status information.
